# EUROPEAN PATENT APPLICATION

(11) **EP 1 998 424 A1**
(43) Date of publication of application: **03.12.2008**
(21) Application number: 08381008.5
(22) Date of filing: 27.02.2008
(51) Int. Cl.: H02J 7/35

(54) **Installation supplied by solar energy**

(30) Priority: 24.05.2007 ES 200701414
(71) Applicant: Farmont, S.L., 08211 Castellar del Vallés (ES)
(72) Inventor: Farres Llonch, Carlos, 08211 CASTELLAR DEL VALLÉS (ES)
(74) Representative: Esteban Perez-Serrano, Maria Isabel

(57) **Abstract**

Inverter that not only serves to convert energy that is generated from DC to AC, but that also makes it possible to recharge a DC battery, as well as selecting whether the energy that is generated is destined for self-consumption or for sale. To do this, the inverter has a DC / DC converter and a DC / AC converter, a charge regulator that is connected between the input and the DC /DC converter, the output of the DC / DC regulator having a connection to a DC battery that is to be recharged; it also has a switch that chooses which of the two outputs the energy is to be supplied through, whether through the self-consumption output or through the sale output; the switch is actuated by means of a selector.

## Description

### OBJECT OF THE INVENTION

The object of the present invention is a multi-function inverter, which makes it possible to simultaneously supply energy for sale and for self-consumption, as well as to recharge a number of batteries.

The present invention is characterised by the special configuration of the elements that are incorporated into a commercial inverter with the objective of achieving the multi-functionality proposed herein.

The present invention therefore lies within the field of inverter equipment that converts a DC input voltage into an AC output voltage at values that permit said voltage to be either injected into the distribution network or used for self-consumption.

### BACKGROUND OF THE INVENTION

Until now the inverter equipment used in different fields, and in particular in the photovoltaic solar energy industry, has only made it possible to produce a single AC output voltage, which is generally used for just one function, either for self-consumption or for selling to the distribution network.

Furthermore, said inverter equipment does not have an output that permits DC batteries to be recharged, a functionality that would be possible bearing in mind the DC input voltage of an inverter.

There is a growing demand for multi-function inverters, i.e. inverters that are not limited to a single function, but that make it possible to recharge a battery, sell the energy that is generated or use it for self-consumption, depending on a number of parameters or requirements.

Therefore, it is the object of the present invention to develop inverter equipment that overcomes the aforementioned disadvantages that result from being limited to a single function by developing an inverter such as that disclosed herein that makes it possible to charge a DC battery, use the energy that is generated for self-consumption or sell the energy that is generated, according to a number of parameters or selectors.

### DESCRIPTION OF THE INVENTION

The present invention of a multi-function inverter basically consists of a commercial inverter to which a number of functional and structural changes have been made, making it possible to charge a DC battery, use the energy that is generated for self-consumption, or sell the energy that is generated.

Like all inverters, it will have a DC voltage input, a DC / DC converter in order to raise the values of the input voltage to suitable values for the AC converter, all these being controlled by a CPU, and it will have only one output, which will be that used for self-consumption or for sale, a double functionality not being possible.

In order to achieve the aforementioned purpose, in addition to the above-described elements, the inverter has a battery charge regulator between the DC voltage input and the DC / DC converter, the output of which is simultaneously connected to both the DC / DC converter and to the connection output for charging the battery.

After a battery is connected for recharging, the battery charge regulator recognises the battery charge level, and according to the battery charge value, it decides whether to charge the battery or to convert the voltage to AC.

To do this, the inverter's means of programming and control is used to program a maximum battery charge value, so that when the battery charge value is below said maximum value, the charging of the battery takes priority.

However, when the battery charge value is above the maximum value, the input energy is raised and subsequently converted to AC for sale or for self-consumption.

The inverter has an automatic / manual selector, which makes it possible to select the operation mode of the inverter. Therefore, in the manual position, the energy produced is destined for self-consumption, whilst in the automatic position, the energy produced is destined for sale. When the selector is in the automatic position, it is the inverter itself that is responsible for selecting, on the basis of a number of parameters, whether the energy produced is destined for recharging DC batteries or for sale.

The battery charge regulator works according to two parameters, one of which is the input voltage level, so that below a certain level it suspends all subsequent action, whilst above said level, on the basis of the charge level of the battery that is connected, it decides whether the DC energy is to be used to recharge the battery or should be raised and subsequently converted to AC.

### EXPLANATION OF THE FIGURES

To complement the following description and to aid a better understanding of its characteristics, an illustrative, non-limiting set of drawings is attached to this description, showing the most significant details of the invention.

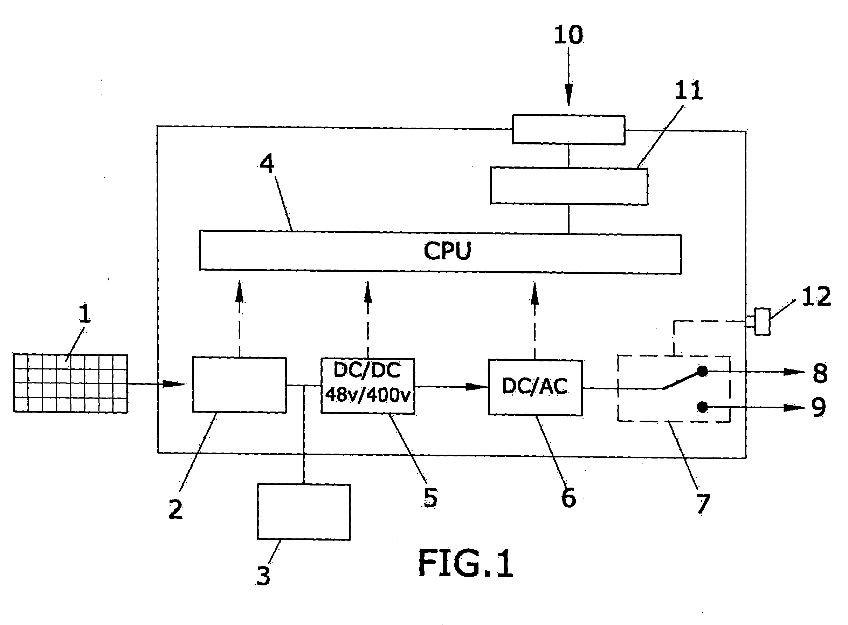

Figure 1 shows a drawing of the elements that make up the inverter that is the object of the invention.

### PREFERRED EMBODIMENT OF THE INVENTION

In the light of the figures, a preferred embodiment of the proposed invention is disclosed below.

In said figure 1 it can be observed that inverter has the usual elements of a commercial inverter, regardless of the use to be made of it, whether to produce energy for sale or for self-consumption.

The inverter therefore has a DC input voltage like any other commercial inverter, to which the DC voltage supply is connected, which is shown in this case as a photovoltaic solar panel (1). It also has a DC / DC converter (5), which adapts the input voltage levels to the levels of the DC / AC converter (6). It also has a CPU (4), which controls the operation of both converters, and a communications port (10), receiving all types of pre-programmed orders through an input (10).

The following elements are added to a commercial inverter of the type described above in order to achieve the aforementioned functionalities:
- A battery charge regulator (2) positioned after the input, to which a solar panel (1) is connected, and a DC / DC converter (5), having an output at the output of the battery charge regulator (2) for its connection to a possible DC battery (3) that is to be recharged.
- A switch (7) that, when actuated by means of a selector (12), chooses whether to supply the energy that is generated through an output (8) for self-consumption or through an output (9) for sale.
- An output (8) for self-consumption of the energy that is generated.
- An output (9) for selling the energy that is generated.

The inverter works in such a way that recharging the battery (3) takes priority over any other action, and if a DC battery (3) is connected, the battery charge regulator (2) detects the battery charge level, so that if it is below a preestablished level, the energy that is supplied, in this case by the photovoltaic solar panel, is preferentially destined to recharge the battery. Once said level is exceeded, the energy that is generated is either destined for self-consumption or for sale, depending on the position of a selector.

The entire operation of the inverter is conditioned not only by the parameter of the charge level of the battery connected thereto, but also by the input voltage level parameter, so that if it is below a minimum level, no energy is produced.

Variations in the materials, shape, size and arrangement of the components do not alter the essence of this invention, which is described in a non-limiting manner, said description being sufficient for a person skilled in the art to carry out the procedure.

## Claims

1. Multi-function inverter that has a DC input, with a DC / DC converter (5) and with a DC / AC converter (6), both controlled by a CPU (4), which is externally connected via a communications port (11) by means of an input (10), **characterised in that** it also has:
A charge regulator (2) for a battery (3), being connected between the DC input and the DC / DC converter (5), and an output for connection to a battery (3) that is to be recharged.
A switch (7) that, when a selector (12) is actuated, selects whether to supply the energy that is generated through an output (8) for self-consumption or through an output (9) for sale.
Wherein, with a minimum input voltage level and when a battery (3) is connected for recharging, the charge regulator (2) detects its charge level and if it is below a specified level the recharging of the battery takes priority, whilst if it is above the charge level of the battery (3) energy is supplied either for self-consumption through the self-consumption output (8) or for sale through the sale output (9), depending on the actuation of the switch (7).
